# EUROPEAN PATENT SPECIFICATION

(11) **EP 4 445 063 B1**
(45) Date of publication and mention of the grant of the patent: **04.02.2026**
(21) Application number: 22836341.2
(22) Date of filing: 05.12.2022
(51) Int. Cl.: F16M 11/04, F16M 11/08, F16M 13/02, F16M 11/20

(54) **A CARRIER DEVICE FOR CARRYING AN OBJECT, SUCH AS A LAMP**
TRÄGERVORRICHTUNG ZUM TRAGEN EINES OBJEKTS, WIE ETWA EINER LAMPE
DISPOSITIF DE SUPPORT POUR PORTER UN OBJET, TEL QU'UNE LAMPE

(30) Priority: 07.12.2021 NL 2030060
(43) Date of publication of application: 16.10.2024
(73) Proprietor: Haas Kraan B.V., 4151CP Acquoy (NL)
(72) Inventor: DE HAAS, Fortunatus Johannes, 4151 CP Acquoy (NL)
(74) Representative: Dogio Patents B.V.
(86) International application number: PCT/NL2022/050700
(87) International publication number: WO 2023/106916

(56) References cited:
- EP-A1- 3 782 777

## Description

The present invention relates to a foldable and rotatable carrier device for carrying and positioning an object, such as a lamp, comprising:
a base bracket arranged to be connected to a base;
an object bracket arranged to be connected to the object;
a joint bracket arranged between the base bracket and the object bracket;
a first link pivotally connected at a first end to the base bracket around a first pivot axis and pivotally connected at a second end to the joint bracket around a second pivot axis which is parallel to the first pivot axis;
a second link pivotally connected at a first end to the base bracket around a third pivot axis which is parallel to the first pivot axis and pivotally connected at a second end to the joint bracket around a fourth pivot axis which is parallel to the first pivot axis;
said base bracket, said joint bracket, said first link and said second link together forming a first parallelogram linkage such that the joint bracket is held in a fixed orientation relative to the base bracket;
a third link pivotally connected at a first end to the joint bracket around a fifth pivot axis and connected at a second end to the object bracket;
wherein said joint bracket comprises a first joint bracket member to which the first link is connected around said second pivot axis and to which the second link is connected around the fourth pivot axis, and a second joint bracket member to which the third link is connected around said fifth pivot axis; and
wherein said first joint bracket member and said second joint bracket member are arranged to rotate relative to each other around a rotation axis which is perpendicular to the second pivot axis, the fourth pivot axis and the fifth pivot axis.

Such a carrier device is disclosed in EP-A-3782777.

Another carrier device is disclosed in DE-A-3822008. This kind of carrier devices can be used in many applications, for instance, but not limited to, computer monitor arms, desk lamps, surgical lights, cranes, articulated boom lifts, robots, and many more. The base bracket can be designed to be permanently or removably mounted to another object, such as a table, a desk, a wall, a ceiling, a frame, a body of a person, a crane, a vehicle, etc. The parallelogram linkage maintains the joint bracket in a fixed orientation and the connecting link forces the third link to move in sync with, and in a mirrored manner, to the first link. This has the advantage that both links can be balanced and manipulated together. A second parallelogram linkage comprising the third link may also maintain the object bracket in a fixed orientation. By using a double coupled parallel linkage system the object can be easily positioned at any location along the surface of a relatively large hemisphere of reach.

A different carrier device is disclosed in WO-A-2018053063, wherein two separately balanced and manipulated parallelogram linkage systems of a carrier device are connected to each other by means of a hingeable joint bracket. This has the advantage that the object can be positioned in many different locations and orientations within the hemisphere of reach.

The invention aims at a new and improved foldable and rotatable carrier device which combines advantages of prior art carrier devices.

To this end, a carrier device according to the preamble is characterized in that
said carrier device comprises a connecting link which is pivotally connected at a first end to the first link at a distance from the second pivot axis, and which is pivotally connected at a second end to the third link at a distance from the fourth pivot axis;
wherein said connecting link comprises a first connecting link member and a second connecting link member, wherein the first connecting link member is pivotally connected at said first end to the first link, and the second connecting link member is pivotally connected at said second end to the third link, and the first connecting link member and the second connecting link member are mutually connected and provided with rotational joint means which are arranged to allow the second connecting link member to hinge relative to the first connecting link member in all directions, and to allow a respective one of said first or second end of a respective first or second connecting link member to rotate around the axis of the respective connecting link member; and
wherein the joint bracket is provided with guide means which are arranged to keep the centre of rotation of the connection between the first connecting link member and the second connecting link member on said rotation axis.

By combining a rotatable joint bracket with a hingeable connecting link, and maintaining the hinge between the connecting link members on the vertical rotation axis, a horizontally rotatable articulated arm is provided, while the vertical movement is still forcibly mirrored. Thereby the device can be easily manipulated, and, in principle, only one balancer is necessary in the device.

This linkage system can be applied in carrier devices such as the carrier device of the Anglepoise lamp, disclosed in US 2,076, 446, wherein the upper arm is a single (third) link, as well as in carrier devices wherein the upper arm is designed as a second parallelogram linkage, as described below.

According to a preferred embodiment, said third link is pivotally connected at said second end to the object bracket around a sixth pivot axis which is parallel to the fifth pivot axis;
wherein a fourth link is pivotally connected at a first end to the second joint bracket member around a seventh pivot axis which is parallel to the fifth pivot axis and pivotally connected at a second end to the object bracket around an eighth pivot axis which is parallel to the fifth pivot axis; and
wherein said second joint bracket member, said object bracket, said third link and said fourth link together form a second parallelogram linkage, such that the object bracket is held in a fixed orientation relative to the second joint bracket member.

According to an especially preferred embodiment, the second pivot axis and the fourth pivot axis of the first joint bracket member, and the fifth pivot axis and the seventh pivot axis of second joint bracket member are each located on different corners of a parallelogram in one rotational state of the joint bracket, seen in cross section.

According to a preferred embodiment, the first connecting link member is pivotally connected at said first end to the first link at a location which is on or near the rotation axis, and the second connecting link member is pivotally connected at said second end to the third link at a location which is on or near the rotation axis, at least when the carrier device is in a fully folded state, a fully unfolded state or somewhere in between.

According to a preferred embodiment, said rotational joint means comprise a rod end joint between the first connecting link member and the second connecting link member, and said respective end of the respective connecting link member is arranged to rotate around the axis of said respective connecting link member.

According to an especially preferred embodiment, said rod end joint comprises a rod end which is pivotally connected at said second end to the second connecting link member and comprising a ball swivel, and the first connecting link member comprises a shaft on which said ball swivel of the rod end is mounted, said shaft having an axis which is parallel to the pivot axis of said first connecting link member.

According to an alternative embodiment, said rotational joint means comprise a ball and socket joint between the first connecting link member and the second connecting link member.

According to a preferred embodiment, said guide means comprise at least one linear track, such as a rail or a slot, which extends parallel with said rotation axis, and which is provided on or in said first joint bracket member or said second joint bracket member, and a mutually connected end of the first connecting link member or the second connecting link member is movably mounted in or on said track.

According to a preferred embodiment, said first joint bracket member and said second joint bracket member are connected to each other by means of a rolling bearing, preferably an angular contact ball bearing or a tapered roller bearing, or a sliding bearing.

The type of bearing can be chosen in dependence of the desired friction for the rotational movement.

According to a preferred embodiment, the carrier device is provided with at least one weight balancer in the form of a compression spring or a tension spring, which acts on the carrier device in order to counteract a weight of the object and the carrier device.

According to a preferred embodiment, the base bracket is rotatably connected to a base mounting member around an axis which is parallel to said rotation axis of the joint bracket.

According to a favourable embodiment, the carrier device forms a foldable and rotatable arm of a lamp, and the object is a lamp-head of the lamp.

According to a favourable embodiment, the carrier device forms a foldable and rotatable arm of a surgical light and the object is a surgical lighthead of the surgical light.

According to a favourable embodiment, the carrier device forms a foldable and rotatable boom of a truck mountable crane and the object is a load to be lifted by the truck mounted crane.

According to a favourable embodiment, the carrier device forms a foldable and rotatable boom of an articulated boom lift and the object is a platform to be lifted by the articulated boom lift.

According to a favourable embodiment, the carrier device forms a foldable and rotatable arm of a robot and the object is a load to be manipulated by the robot.

The present invention will now be illustrated with reference to the drawing where
Fig. 1a is a side view of a carrier device in two different positions, wherein the carrier device forms a foldable and rotatable display arm and the object is a computer display;
Fig. 1b is a top view of the carrier device of figure 1a in three different positions;
Fig. 2 is a side view of a carrier device, wherein the object is a load to be lifted by a truck mounted crane and the carrier device forms a foldable boom of the crane;
Fig. 3 is a side view of a carrier device, wherein the object is lamp-head of a desk lamp and the carrier device forms a foldable arm of the desk lamp;
Fig. 4 is a side view of a carrier device, wherein the object is surgical lighthead of a surgical light and the carrier device forms a foldable arm of the surgical light;
Fig. 5a is a perspective view of the carrier device of Figures 1a and 1b in a folded intermediate state;
Fig. 5b is a perspective view of the carrier device in a stretched high state;
Fig. 5c is a perspective view of the carrier device in a stretched low state;
Fig. 6a is a cross section of the carrier device in stretched high state;
Fig. 6b is a cross section of the carrier device in an intermediate stretched state;
Fig. 6c is a cross section of the carrier device in a low stretched state;
Fig. 7 is a cross section of the carrier device in an intermediate stretched state, with alternative balancing means;
Fig. 8a is a perspective partially open view of the joint of the carrier device;
Fig. 8b is a perspective view of a detail of the joint of the carrier device;
Fig. 8c is a perspective partially open view of a detail of the joint of the carrier device;
Fig. 8d is a perspective partially open view of a detail of the joint of the carrier device;
Fig. 8e is a perspective partially open view of a detail of the joint of the carrier device;
Fig. 9a is a cross section of a the joint of the carrier device;
Fig. 9b is a side view of a detail of the joint; and
Fig. 9c is a front view of a detail of the joint.

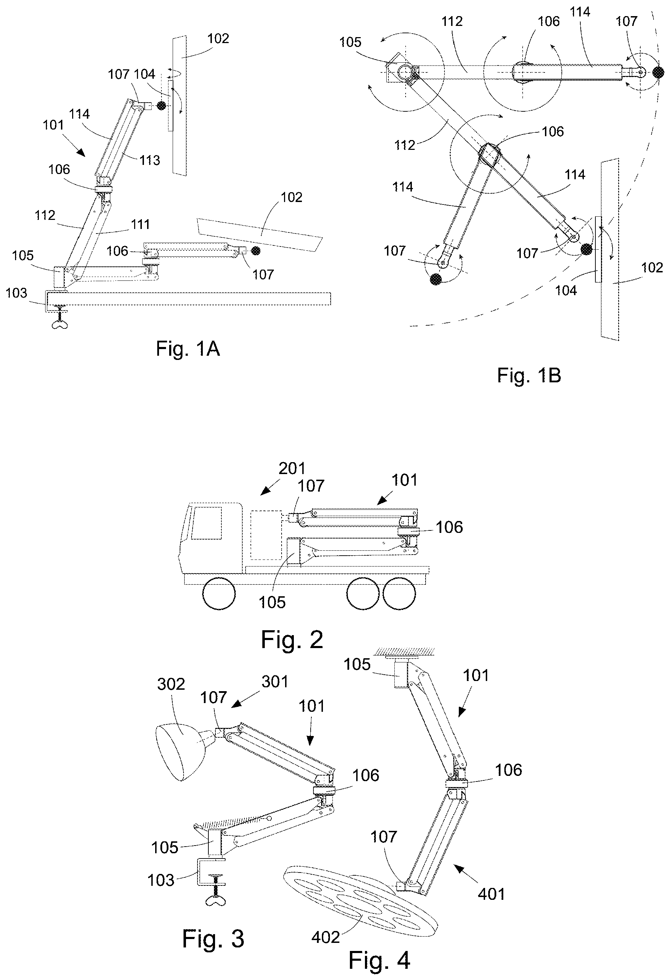

In Figures 1a and 1b a carrier device 101 for carrying a monitor 102 is shown in various examples of positions and orientations that the monitor can be brought into thanks to the features of the carrier device 101. The carrier device 101 is provided with a base mount 103 in the form of a desk clamp, and a VESA attachment interface 104, to which the monitor 102 is attached.

The carrier device comprises a base bracket 105, which is rotatably connected to the base mount 103 around a vertical axis, a joint bracket 106 which is connected to the base bracket 105 by means of a first link 111 and a second link 112, and an object bracket 107 which is connected to the joint bracket 106 by means of a third link 113 and a fourth link 114. The VESA attachment interface 104 is rotatably connected to the object bracket 107.

Figure 2 shows a truck mounted crane 201 provided with a carrier device 101.

Figure 3 shows a desk lamp 301 with a lamp-head 302 provided with a carrier device 101.

Figure 4 shows a ceiling mounted surgical lamp 401 with a surgical lighthead 402 provided with a carrier device 101.

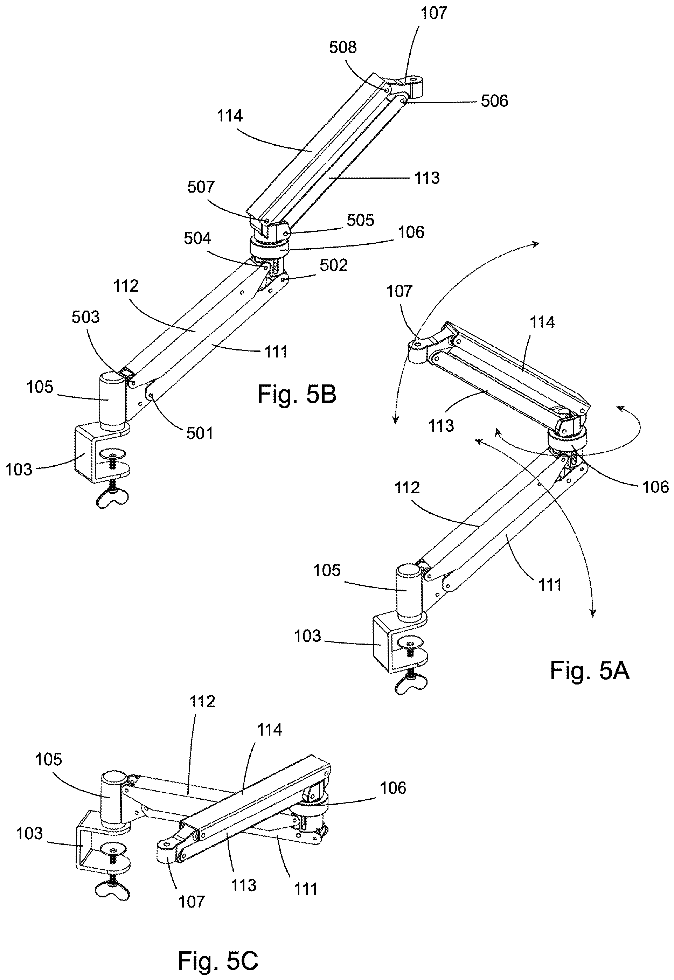

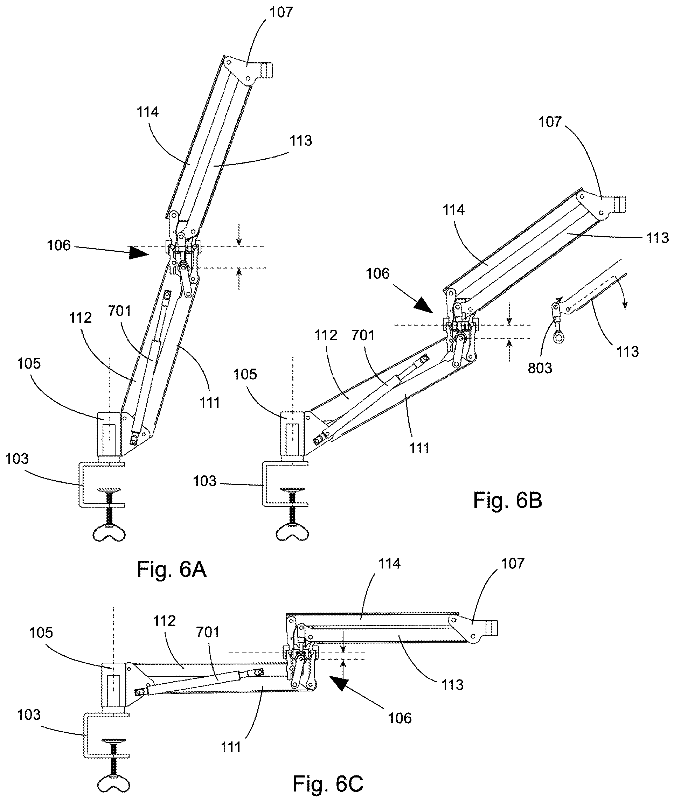

With reference to Figures 5a-c and 6a-c, the first link 111 is pivotally connected to the base bracket 105 around a first horizontal pivot axis 501 and pivotally connected at a second end to the joint bracket 106 around a second horizontal pivot axis 502. The second link 112 is pivotally connected at a first end to the base bracket 105 around a third horizontal pivot axis 503 and pivotally connected at a second end to the joint bracket 106 around a fourth horizontal pivot axis 504. The base bracket 105, the joint bracket 106, the first link 111 and the second link 112 together form a first parallelogram linkage such that the joint bracket 106 is held in a fixed orientation relative to the base bracket 105.

The third link 113 is pivotally connected at a first end to the joint bracket 106 around a fifth horizontal pivot axis 505 and pivotally connected at a second end to the object bracket 107 around a sixth horizontal pivot axis 506. The fourth link 114 is pivotally connected at a first end to the joint bracket 106 around a seventh horizontal pivot axis 507 and pivotally connected at a second end to the object bracket 107 around an eighth horizontal pivot axis 508. Said joint bracket 106, said object bracket 107, said third link 113 and said fourth link 114 together forming a second parallelogram linkage, such that the object bracket 107 is held in a fixed orientation relative to the joint bracket 106.

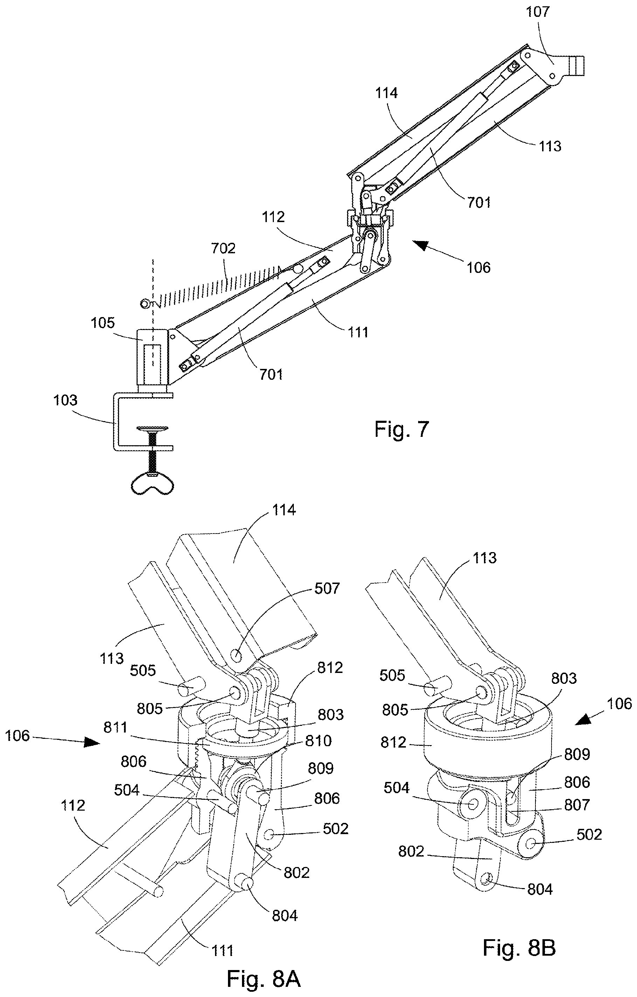

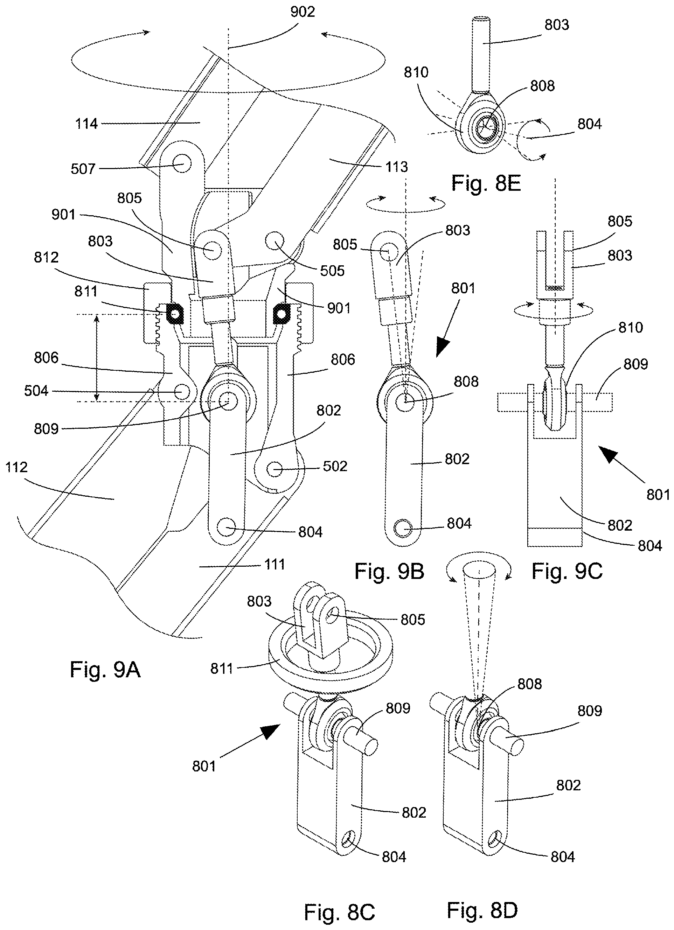

A connecting link, located inside the joint bracket 106 and as described below with reference to Figures 8a-e and 9a-c, connects the first link 111 and the third link 113, such that the vertical movements of the two parallelogram linkages are synced and mirrored (as indicated by the vertical arrows in Figure 5a). The joint bracket 106 is a rotatable joint bracket as described below, such that the two parallelogram linkages can rotate relative to each other around a vertical axis (as indicated by the horizontal arrow in Figure 5a).

In the rotational state of the joint bracket 106 as shown in Figure 5b, the second pivot axis 502, and the fourth pivot axis 504, the fifth pivot axis 505 and the seventh pivot axis 507 are located on the corners of a parallelogram, which has the same orientation as the other two parallelogram linkages. The vertical angle between each corresponding pair of pivot axes (501/503, 502/504, 505/507 and 506/508) determines the hemispherical area where the object can be moved (i.e. a high area or a low area) and can be chosen when designing the device.

This arrangement allows for the various positions and orientations of the carrier device, as illustrated in Figures 5a-c and 6a-c.

As shown in Figure 7 the carrier device 101 is provided with at one or more weight balancers in the form of a compression spring 701 or a tension spring 702 or both. If only one balancer is used, it may be attached to any of the links 111, 112, 113, 114 on one end and to any of the corresponding brackets 105, 106, 107 or to the corresponding parallel link 111, 112, 113, 114 on the other end. The balancers may be adjustable for the weight to be carried, and if two balancers are used, one balancer attached to one parallelogram linkage may be adjustable for weight and the other balancer attached to the other parallelogram may not be adjustable for weight.

With reference to Figures 8a-e and 9a-c, the hollow, generally tube shaped joint bracket 106 comprises a lower first joint bracket member 806 to which the first link 111 is connected around said second pivot axis 502 and to which the second link 112 is connected around the fourth pivot axis 504, and a upper second joint bracket member 901 to which the third link 113 is connected around said fifth pivot axis 505. The first joint bracket member 806 and the second joint bracket member 901 can rotate relative to each other around a vertical rotation axis 902. To that end the first joint bracket member 806 and the second joint bracket member 901 are connected to each other by means of an angular contact ball bearing 811, which is mounted in the first joint bracket member 806 by means of a screw cap 812, and on the other side is held in a groove of the second joint bracket member 901.

A connecting link 801 extends inside and through the joint bracket 106 and is pivotally connected at a first end to the first link 111 around a horizontal axis 804 at a distance from the second pivot axis 502, and is pivotally connected at a second end to the third link 113 around a horizontal axis 805 at a distance from the fourth pivot axis 504. The connecting link 801 comprises a first connecting link member 802 and a second connecting link member 803. The first connecting link member 802 is connected to the first link 111 at a location which is designed such that it is always on or near the vertical rotation axis 902, and the second connecting link member 803 is connected to the third link at a location which is also always on or near the vertical rotation axis 902, in any folded or rotated state of the device.

The second connecting link member 803 comprises a rod end comprising a ball swivel 810 which is mounted on a shaft 809 held by the end of the first connecting link member 802, thereby forming a rod end joint. Thereby the first connecting link member 802 and the second connecting link member 803 are mutually connected in such a manner such that second connecting link member 803 can hinge relative to the first connecting link member 802 in all directions (as indicated by the arrow and the dotted lines in Figure 9b). Furthermore the upper end of the second connecting link member 803 can rotate around the axis of the second connecting link member 803 (as indicated by the arrow in Figure 9c).

The first joint bracket member 806 is provided with guide means comprising slots 807 which extend parallel with said rotation axis 902, in which the shaft 809 of the first connecting link member 802 can slide up and down, thereby keeping the centre of rotation 808 of the connection between the first second connecting link member 802 and the second connecting link member 803 on the vertical rotation axis 902.

By the above described construction the connecting link 801 can vertically push and pull the upper parallelogram linkage to move up and down in sync with the lower parallelogram linkage in a mirrored manner, while the two parallelogram linkages are allowed to rotate relative to each other around the vertical axis 902.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The invention is defined by the appended claims.

## Claims

1. A foldable and rotatable carrier device (101) for carrying and positioning an object, such as a lamp, comprising:
a base bracket (105) arranged to be connected to a base;
an object bracket (107) arranged to be connected to the object;
a joint bracket (106) arranged between the base bracket (105) and the object bracket (107);
a first link (111) pivotally connected at a first end to the base bracket (105) around a first pivot axis (501) and pivotally connected at a second end to the joint bracket (106) around a second pivot axis (502) which is parallel to the first pivot axis (501);
a second link (112) pivotally connected at a first end to the base bracket (105) around a third pivot axis (503) which is parallel to the first pivot axis (501) and pivotally connected at a second end to the joint bracket (106) around a fourth pivot axis (504) which is parallel to the first pivot axis (501);
said base bracket (105), said joint bracket (106), said first link (111) and said second link (112) together forming a first parallelogram linkage such that the joint bracket (106) is held in a fixed orientation relative to the base bracket (105);
a third link (113) pivotally connected at a first end to the joint bracket (106) around a fifth pivot axis (505) and connected at a second end to the object bracket (107);
wherein said joint bracket (106) comprises a first joint bracket member (806) to which the first link (111) is connected around said second pivot axis (502) and to which the second link (112) is connected around the fourth pivot axis (504), and a second joint bracket member (901) to which the third link (113) is connected around said fifth pivot axis (505); and
wherein said first joint bracket member (806) and said second joint bracket member (901) are arranged to rotate relative to each other around a rotation axis (902) which is perpendicular to the second pivot axis (502), the fourth pivot axis (504) and the fifth pivot axis (505);
**characterized in that**
said carrier device (101) comprises a connecting link (801) which is pivotally connected at a first end to the first link (111) at a distance from the second pivot axis (502), and which is pivotally connected at a second end to the third link (113) at a distance from the fourth pivot axis (504);
wherein said connecting link (801) comprises a first connecting link member (802) and a second connecting link member (803), wherein the first connecting link member (802) is pivotally connected at said first end to the first link (111), and the second connecting link member (803) is pivotally connected at said second end to the third link (113), and the first connecting link member (802) and the second connecting link member (803) are mutually connected and provided with rotational joint means which are arranged to allow the second connecting link member (803) to hinge relative to the first connecting link member (802) in all directions, and to allow a respective one of said first or second end of a respective first or second connecting link member (802, 803) to rotate around the axis of the respective connecting link (801) member; and
wherein the joint bracket (106) is provided with guide means (807) which are arranged to keep the centre of rotation (808) of the connection between the first connecting link (801) member and the second connecting link member (803) on said rotation axis (902).

2. The carrier device (101) according to claim 1, wherein said third link (113) is pivotally connected at said second end to the object bracket (107) around a sixth pivot axis which is parallel to the fifth pivot axis (505);
wherein a fourth link (114) is pivotally connected at a first end to the second joint bracket member (901) around a seventh pivot axis (507) which is parallel to the fifth pivot axis (505) and pivotally connected at a second end to the object bracket (107) around an eighth pivot axis which is parallel to the fifth pivot axis (505); and wherein said second joint bracket member (901), said object bracket (107), said third link (113) and said fourth link (114) together form a second parallelogram linkage, such that the object bracket (107) is held in a fixed orientation relative to the second joint bracket member (901).

3. The carrier device (101) according to claim 2, wherein the second pivot axis (502) and the fourth pivot axis (504) of the first joint bracket member (806), and the fifth pivot axis (505) and the seventh pivot axis (507) of second joint bracket member (901) are each located on different corners of a parallelogram in one rotational state of the joint bracket (106), seen in cross section.

4. The carrier device (101) according to any of the preceding claims, wherein the first connecting link (801) member is pivotally connected at said first end to the first link (111) at a location which is on or near the rotation axis (902), and the second connecting link member (803) is pivotally connected at said second end to the third link (113) at a location which is on or near the rotation axis (902), at least when the carrier device (101) is in a fully folded state, a fully unfolded state or somewhere in between.

5. The carrier device (101) according to any of the preceding claims, wherein said rotational joint means comprise a rod end joint between the first connecting link (801) member and the second connecting link member (803), and said respective end of the respective connecting link (801) member is arranged to rotate around the axis of said respective connecting link (801) member.

6. The carrier device (101) according to claim 5, wherein said rod end joint comprises a rod end which is pivotally connected at said second end to the second connecting link member (803) and comprising a ball swivel (810), and the first connecting link (801) member comprises a shaft (809) on which said ball swivel (810) of the rod end is mounted, said shaft (809) having an axis which is parallel to the pivot axis of said first connecting link (801) member.

7. The carrier device (101) according to any of the claims 1 to 4, wherein said rotational joint means comprise a ball and socket joint between the first connecting link (801) member and the second connecting link member (803).

8. The carrier device (101) according to any of the preceding claims, wherein said guide means comprise at least one linear track (807), such as a rail or a slot, which extends parallel with said rotation axis (902), and which is provided on or in said first joint bracket member (806) or said second joint bracket member (901), and a mutually connected end of the first connecting link (801) member or the second connecting link member (803) is movably mounted in or on said track (807).

9. The carrier device (101) according to any of the preceding claims, wherein said first joint bracket member (806) and said second joint bracket member (901) are connected to each other by means of a rolling bearing (811), preferably an angular contact ball bearing (811) or a tapered roller bearing (811), or a sliding bearing (811).

10. The carrier device (101) according to any of the preceding claims, wherein the carrier device (101) is provided with at least one weight balancer in the form of a compression spring (701) or a tension spring (702), which acts on the carrier device (101) in order to counteract a weight of the object and the carrier device (101).

11. The carrier device (101) according to any of the preceding claims, wherein the base bracket (105) is rotatably connected to a base mounting member around an axis which is parallel to said rotation axis (902) of the joint bracket (106).

12. The carrier device (101) according to any of the preceding claims, wherein the carrier device (101) forms a foldable and rotatable arm of a lamp, and the object is a lamp-head (302) of the lamp.

13. The carrier device (101) according to any of the preceding claims, wherein the carrier device (101) forms a foldable and rotatable arm of a surgical light and the object is a surgical lighthead (402) of the surgical light.

14. The carrier device (101) according to any of the preceding claims, wherein the carrier device (101) forms a foldable and rotatable boom of a truck mountable crane (201) and the object is a load to be lifted by the truck mounted crane (201).

15. The carrier device (101) according to any of the preceding claims, wherein the carrier device (101) forms a foldable and rotatable boom of an articulated boom lift and the object is a platform to be lifted by the articulated boom lift.

## Patentansprüche

1. Klappbare und drehbare Trägervorrichtung (101) zum Tragen und Positionieren eines Objekts, wie etwa einer Lampe, umfassend:
eine Basishalterung (105), die angeordnet ist, um mit einer Basis verbunden zu werden;
eine Objekthalterung (107), die dazu angeordnet ist, mit dem Objekt verbunden zu werden;
eine Gelenkhalterung (106), die zwischen der Basishalterung (105) und der Objekthalterung (107) angeordnet ist;
ein erstes Glied (111), das an einem ersten Ende um eine erste Schwenkachse (501) schwenkbar mit der Basishalterung (105) verbunden ist und an einem zweiten Ende um eine zweite Schwenkachse (502), die parallel zu der ersten Schwenkachse (501) ist, schwenkbar mit der Gelenkhalterung (106) verbunden ist;
ein zweites Glied (112), das an einem ersten Ende um eine dritte Schwenkachse (503), die parallel zu der ersten Schwenkachse (501) ist, schwenkbar mit der Basishalterung (105) verbunden ist und an einem zweiten Ende um eine vierte Schwenkachse (504), die parallel zu der ersten Schwenkachse (501) ist, schwenkbar mit der Gelenkhalterung (106) verbunden ist;
wobei die Basishalterung (105), die Gelenkhalterung (106), das erste Glied (111) und das zweite Glied (112) zusammen ein erstes Parallelogrammgestänge bilden, so dass die Gelenkhalterung (106) in einer festen Ausrichtung relativ zu der Basishalterung (105) gehalten wird;
ein drittes Glied (113), das an einem ersten Ende um eine fünfte Schwenkachse (505) schwenkbar mit der Gelenkhalterung (106) verbunden ist und an einem zweiten Ende mit der Objekthalterung (107) verbunden ist;
wobei die Gelenkhalterung (106) ein erstes Gelenkhalterungselement (806), mit dem das erste Glied (111) um die zweite Schwenkachse (502) verbunden ist und mit dem das zweite Glied (112) um die vierte Schwenkachse (504) verbunden ist, und ein zweites Gelenkhalterungselement (901), mit dem das dritte Glied (113) um die fünfte Schwenkachse (505) verbunden ist, umfasst; und
wobei das erste Gelenkhalterungselement (806) und das zweite Gelenkhalterungselement (901) so angeordnet sind, dass sie sich relativ zueinander um eine Drehachse (902) drehen, die senkrecht zu der zweiten Schwenkachse (502), der vierten Schwenkachse (504) und der fünften Schwenkachse (505) ist;
**dadurch gekennzeichnet, dass**
die Trägervorrichtung (101) ein Verbindungsglied (801) umfasst, das an einem ersten Ende mit dem ersten Glied (111) in einem Abstand von der zweiten Schwenkachse (502) schwenkbar verbunden ist und das an einem zweiten Ende mit dem dritten Glied (113) in einem Abstand von der vierten Schwenkachse (504) schwenkbar verbunden ist;
wobei das Verbindungsglied (801) ein erstes Verbindungsgliedelement (802) und ein zweites Verbindungsgliedelement (803) umfasst, wobei das erste Verbindungsgliedelement (802) an dem ersten Ende schwenkbar mit dem ersten Glied (111) verbunden ist und das zweite Verbindungsgliedelement (803) an dem zweiten Ende schwenkbar mit dem dritten Glied (113) verbunden ist, und das erste Verbindungsgliedelement (802) und das zweite Verbindungsgliedelement (803) miteinander verbunden und mit Drehgelenkmitteln versehen sind, die angeordnet sind, um dem zweiten Verbindungsgliedelement (803) zu ermöglichen, sich relativ zu dem ersten Verbindungsgliedelement (802) in allen Richtungen zu drehen, und um einem jeweiligen aus dem ersten oder zweiten Ende eines jeweiligen ersten oder zweiten Verbindungsgliedelements (802, 803) zu ermöglichen, sich um die Achse des jeweiligen Verbindungsgliedelements (801) zu drehen; und
wobei die Gelenkhalterung (106) mit Führungsmitteln (807) versehen ist, die angeordnet sind, um den Drehpunkt (808) der Verbindung zwischen dem ersten Verbindungsgliedelement (801) und dem zweiten Verbindungsgliedelement (803) auf der Drehachse (902) zu halten.

2. Trägervorrichtung (101) nach Anspruch 1, wobei das dritte Glied (113) an dem zweiten Ende um eine sechste Schwenkachse, die parallel zu der fünften Schwenkachse (505) ist, schwenkbar mit der Objekthalterung (107) verbunden ist;
wobei ein viertes Glied (114) an einem ersten Ende um eine siebte Schwenkachse (507), die parallel zu der fünften Schwenkachse (505) ist, schwenkbar mit dem zweiten Gelenkhalterungselement (901) verbunden ist und an einem zweiten Ende um eine achte Schwenkachse, die parallel zu der fünften Schwenkachse (505) ist, schwenkbar mit der Objekthalterung (107) verbunden ist; und
wobei das zweite Gelenkhalterungselement (901), die Objekthalterung (107), das dritte Glied (113) und das vierte Glied (114) zusammen ein zweites Parallelogrammgestänge bilden, so dass die Objekthalterung (107) in einer festen Ausrichtung relativ zu dem zweiten Gelenkhalterungselement (901) gehalten wird.

3. Trägervorrichtung (101) nach Anspruch 2, wobei sich die zweite Schwenkachse (502) und die vierte Schwenkachse (504) des ersten Gelenkhalterungselements (806) und die fünfte Schwenkachse (505) und die siebte Schwenkachse (507) des zweiten Gelenkhalterungselements (901) in einem Drehzustand der Gelenkhalterung (106) jeweils an verschiedenen Ecken eines Parallelogramms befinden, im Querschnitt gesehen.

4. Trägervorrichtung (101) nach einem der vorhergehenden Ansprüche, wobei das erste Verbindungsgliedelement (801) an dem ersten Ende an einer Stelle, die sich auf oder nahe der Drehachse (902) befindet, schwenkbar mit dem ersten Glied (111) verbunden ist und das zweite Verbindungsgliedelement (803) an dem zweiten Ende an einer Stelle, die sich auf oder nahe der Drehachse (902) befindet, schwenkbar mit dem dritten Glied (113) verbunden ist, zumindest wenn sich die Trägervorrichtung (101) in einem vollständig eingeklappten Zustand, einem vollständig ausgeklappten Zustand oder irgendwo dazwischen befindet.

5. Trägervorrichtung (101) nach einem der vorhergehenden Ansprüche, wobei die Drehgelenkmittel ein Stangenendgelenk zwischen dem ersten Verbindungsgliedelement (801) und dem zweiten Verbindungsgliedelement (803) umfassen und das jeweilige Ende des jeweiligen Verbindungsgliedelements (801) so angeordnet ist, dass es sich um die Achse des jeweiligen Verbindungsgliedelements (801) dreht.

6. Trägervorrichtung (101) nach Anspruch 5, wobei das Stangenendgelenk ein Stangenende umfasst, das an dem zweiten Ende schwenkbar mit dem zweiten Verbindungsgliedelement (803) verbunden ist und eine kugelige Schwenkverbindung (810) umfasst, und das erste Verbindungsgliedelement (801) eine Welle (809) umfasst, auf der die kugelige Schwenkverbindung (810) des Stangenendes gelagert ist, wobei die Welle (809) eine Achse aufweist, die parallel zur Schwenkachse des ersten Verbindungsgliedelements (801) ist.

7. Trägervorrichtung (101) nach einem der Ansprüche 1 bis 4, wobei die Drehgelenkmittel ein Kugelgelenk zwischen dem ersten Verbindungsgliedelement (801) und dem zweiten Verbindungsgliedelement (803) umfassen.

8. Trägervorrichtung (101) nach einem der vorhergehenden Ansprüche, wobei die Führungsmittel mindestens eine lineare Bahn (807), wie etwa eine Schiene oder einen Schlitz, umfassen, die sich parallel zu der Drehachse (902) erstreckt und die an oder in dem ersten Gelenkhalterungselement (806) oder dem zweiten Gelenkhalterungselement (901) bereitgestellt ist, und wobei ein miteinander verbundenes Ende des ersten Verbindungsgliedelements (801) oder des zweiten Verbindungsgliedelements (803) in oder auf der Schiene (807) bewegbar gelagert ist.

9. Trägervorrichtung (101) nach einem der vorhergehenden Ansprüche, wobei das erste Gelenkhalterungselement (806) und das zweite Gelenkhalterungselement (901) mittels eines Wälzlagers (811), vorzugsweise eines Schrägkugellagers (811) oder eines Kegelrollenlagers (811) oder eines Gleitlagers (811) miteinander verbunden sind.

10. Trägervorrichtung (101) nach einem der vorhergehenden Ansprüche, wobei die Trägervorrichtung (101) mit mindestens einem Gewichtsausgleicher in Form einer Druckfeder (701) oder einer Zugfeder (702) versehen ist, die auf die Trägervorrichtung (101) wirkt, um einem Gewicht des Objekts und der Trägervorrichtung (101) entgegenzuwirken.

11. Trägervorrichtung (101) nach einem der vorhergehenden Ansprüche, wobei die Basishalterung (105) um eine Achse, die parallel zu der Drehachse (902) der Gelenkhalterung (106) ist, drehbar mit einem Basishalterungselement verbunden ist.

12. Trägervorrichtung (101) nach einem der vorhergehenden Ansprüche, wobei die Trägervorrichtung (101) einen klappbaren und drehbaren Arm einer Lampe bildet und das Objekt ein Lampenkopf (302) der Lampe ist.

13. Trägervorrichtung (101) nach einem der vorhergehenden Ansprüche, wobei die Trägervorrichtung (101) einen klappbaren und drehbaren Arm einer chirurgischen Leuchte bildet und das Objekt ein chirurgischer Leuchtenkopf (402) der chirurgischen Leuchte ist.

14. Trägervorrichtung (101) nach einem der vorhergehenden Ansprüche, wobei die Trägervorrichtung (101) einen klappbaren und drehbaren Ausleger eines Lkwmontierbaren Krans (201) bildet und das Objekt eine durch den Lkw-montierten Kran (201) anzuhebende Last ist.

15. Trägervorrichtung (101) nach einem der vorhergehenden Ansprüche, wobei die Trägervorrichtung (101) einen klappbaren und drehbaren Ausleger einer Gelenkauslegerhebevorrichtung bildet und das Objekt eine Plattform ist, die durch die Gelenkauslegerhebevorrichtung angehoben werden soll.

## Revendications

1. Dispositif de support (101) pliable et rotatif pour porter et positionner un objet, tel qu'une lampe, comprenant :
un support de base (105) agencé pour être relié à une base ;
un support d'objet (107) agencé pour être relié à l'objet ;
un support de jonction (106) disposé entre le support de base (105) et le support d'objet (107) ;
une première articulation (111) reliée pivotante au niveau d'une première extrémité au support de base (105) autour d'un premier axe de pivotement (501) et reliée pivotante au niveau d'une seconde extrémité au support de jonction (106) autour d'un second axe de pivotement (502) qui est parallèle au premier axe de pivotement (501) ;
une deuxième articulation (112) reliée pivotante au niveau d'une première extrémité au support de base (105) autour d'un troisième axe de pivotement (503) parallèle au premier axe de pivotement (501) et reliée pivotante au niveau d'une seconde extrémité au support de jonction (106) autour d'un quatrième axe de pivotement (504) parallèle au premier axe de pivotement (501) ;
ledit support de base (105), ledit support de jonction (106), ladite première articulation (111) et ladite seconde articulation (112) formant ensemble une première tringlerie en parallélogramme de sorte que le support de jonction (106) est maintenu dans une orientation fixe par rapport au support de base (105) ;
une troisième articulation (113) reliée pivotante au niveau d'une première extrémité au support de jonction (106) autour d'un cinquième axe de pivotement (505) et reliée au niveau d'une seconde extrémité au support d'objet (107) ;
dans lequel ledit support de jonction (106) comprend un premier élément de support de jonction (806) auquel la première articulation (111) est reliée autour dudit deuxième axe de pivotement (502) et auquel la deuxième articulation (112) est reliée autour du quatrième axe de pivotement (504), et un second élément de support de jonction (901) auquel la troisième articulation (113) est reliée autour dudit cinquième axe de pivotement (505) ; et
dans lequel ledit premier élément de support de jonction (806) et ledit second élément de support de jonction (901) sont disposés pour tourner l'un par rapport à l'autre autour d'un axe de rotation (902) qui est perpendiculaire au deuxième axe de pivotement (502), au quatrième axe de pivotement (504) et au cinquième axe de pivotement (505) ;
**caractérisé en ce que**
ledit dispositif de support (101) comprend une articulation de liaison (801) qui est reliée pivotante à une première extrémité à la première articulation (111) à distance du deuxième axe de pivotement (502), et qui est reliée pivotante à une seconde extrémité à la troisième articulation (113) à une distance du quatrième axe de pivotement (504) ;
dans lequel ladite articulation de liaison (801) comprend un premier élément d'articulation de liaison (802) et un second élément d'articulation de liaison (803), dans lequel le premier élément d'articulation de liaison (802) est relié pivotant au niveau de ladite première extrémité à la première articulation (111), et le second élément d'articulation de liaison (803) est relié pivotant au niveau de ladite seconde extrémité à la troisième articulation (113), et le premier élément d'articulation de liaison (802) et le second élément d'articulation de liaison (803) sont mutuellement reliés et pourvus de moyens de jonction rotatifs qui sont agencés pour permettre au second élément d'articulation de liaison (803) de s'articuler par rapport au premier élément d'articulation de liaison (802) dans toutes les directions, et pour permettre à une extrémité respective de ladite première ou seconde extrémité d'un premier ou second élément d'articulation de liaison respectif (802, 803) de tourner autour de l'axe de l'élément d'articulation de liaison respectif (801) ; et
dans lequel le support de jonction (106) est pourvu de moyens de guidage (807) qui sont agencés pour maintenir le centre de rotation (808) de la liaison entre le premier élément d'articulation de liaison (801) et le second élément d'articulation de liaison (803) sur ledit axe de rotation (902).

2. Dispositif de support (101) selon la revendication 1, dans lequel ladite troisième articulation (113) est reliée pivotante au niveau de ladite seconde extrémité au support d'objet (107) autour d'un sixième axe de pivotement qui est parallèle au cinquième axe de pivotement (505) ;
dans lequel une quatrième articulation (114) est reliée pivotante au niveau d'une première extrémité au second élément de support de jonction (901) autour d'un septième axe de pivotement (507) qui est parallèle au cinquième axe de pivotement (505) et reliée pivotante au niveau d'une seconde extrémité au support d'objet (107) autour d'un huitième axe de pivotement qui est parallèle au cinquième axe de pivotement (505) ; et
dans lequel ledit second élément de support de jonction (901), ledit support d'objet (107), ladite troisième articulation (113) et ladite quatrième articulation (114) forment ensemble une seconde tringlerie en parallélogramme, de sorte que le support d'objet (107) est maintenu dans une orientation fixe par rapport au second élément de support de jonction (901).

3. Dispositif de support (101) selon la revendication 2, dans lequel le deuxième axe de pivotement (502) et le quatrième axe de pivotement (504) du premier élément de support de jonction (806), et le cinquième axe de pivotement (505) et le septième axe de pivotement (507) du second élément de support de jonction (901) sont situés chacun à des angles différents d'un parallélogramme dans un état de rotation du support de jonction (106), vu en coupe transversale.

4. Dispositif de support (101) selon l'une quelconque des revendications précédentes, dans lequel le premier élément d'articulation de liaison (801) est relié pivotant au niveau de ladite première extrémité à la première articulation (111) à un emplacement qui est sur ou près de l'axe de rotation (902), et le second élément d'articulation de liaison (803) est relié pivotant au niveau de ladite seconde extrémité à la troisième articulation (113) à un emplacement situé sur ou à proximité de l'axe de rotation (902), au moins lorsque le dispositif de support (101) est dans un état complètement plié, complètement déplié ou quelque part entre les deux.

5. Dispositif de support (101) selon l'une quelconque des revendications précédentes, dans lequel lesdits moyens de jonction rotatifs comprennent un joint d'extrémité de tige entre le premier élément d'articulation de liaison (801) et le second élément d'articulation de liaison (803), et ladite extrémité respective de l'élément d'articulation de liaison respectif (801) est agencée pour tourner autour de l'axe dudit élément d'articulation de liaison respectif (801).

6. Dispositif de support (101) selon la revendication 5, dans lequel ledit joint d'extrémité de tige comprend une extrémité de tige qui est reliée pivotante au niveau de ladite seconde extrémité au second élément d'articulation de liaison (803) et comprenant un pivot à rotule (810), et le premier élément d'articulation de liaison (801) comprend un arbre (809) sur lequel est montée ledit pivot à rotule (810) de l'extrémité de tige, ledit arbre (809) présentant un axe parallèle à l'axe de pivotement dudit premier élément d'articulation de liaison (801).

7. Dispositif de support (101) selon l'une quelconque des revendications 1 à 4, dans lequel lesdits moyens de jonction rotatifs comprennent une jonction à rotule entre le premier élément d'articulation de liaison (801) et le second élément d'articulation d'articulation de liaison (803) .

8. Dispositif de support (101) selon l'une quelconque des revendications précédentes, dans lequel lesdits moyens de guidage comprennent au moins une piste linéaire (807), telle qu'un rail ou une fente, qui s'étend parallèlement audit axe de rotation (902), et qui est prévue sur ou dans ledit premier élément de support de jonction (806) ou ledit second élément de support de jonction (901), et une extrémité reliée l'une à l'autre du premier élément d'articulation (801) ou du second élément d'articulation (803) est montée mobile dans ou sur ladite piste (807).

9. Dispositif de support (101) selon l'une quelconque des revendications précédentes, dans lequel ledit premier élément de support de jonction (806) et ledit second élément de support de jonction (901) sont reliés l'un à l'autre au moyen d'un roulement (811), de préférence un roulement à billes à contact angulaire (811) ou un roulement à rouleaux coniques (811), ou un palier coulissant (811).

10. Dispositif de support (101) selon l'une quelconque des revendications précédentes, dans lequel le dispositif de support (101) est pourvu d'au moins un dispositif d'équilibrage de poids sous la forme d'un ressort de compression (701) ou d'un ressort de tension (702), qui agit sur le dispositif de support (101) pour contrecarrer un poids de l'objet et du dispositif de support (101).

11. Dispositif de support (101) selon l'une quelconque des revendications précédentes, dans lequel le support de base (105) est relié de manière rotative à un élément de montage de base autour d'un axe qui est parallèle audit axe de rotation (902) du support de jonction (106).

12. Dispositif de support (101) selon l'une quelconque des revendications précédentes, dans lequel le dispositif de support (101) forme un bras pliable et rotatif d'une lampe, et l'objet est une tête de lampe (302) de la lampe.

13. Dispositif de support (101) selon l'une quelconque des revendications précédentes, dans lequel le dispositif de support (101) forme un bras pliable et rotatif d'une lumière chirurgicale et l'objet est une tête d'éclairage chirurgicale (402) de la lumière chirurgicale.

14. Dispositif de support (101) selon l'une quelconque des revendications précédentes, dans lequel le dispositif de support (101) forme une flèche pliable et rotative d'une grue (201) pouvant être montée sur un camion et l'objet est une charge devant être levée par la grue (201) montée sur un camion.

15. Dispositif de support (101) selon l'une quelconque des revendications précédentes, dans lequel le dispositif de support (101) forme une flèche pliable et rotative d'une nacelle élévatrice articulée et l'objet est une plateforme devant être levée par la nacelle élévatrice articulée.
